# EUROPÄISCHE PATENTANMELDUNG

(11) **EP 1 167 371 A2**
(43) Veröffentlichungstag der Anmeldung: **02.01.2002**
(21) Anmeldenummer: 01114931.7
(22) Anmeldetag: 20.06.2001
(51) Int. Cl.: C07F 5/02

(54) **Verfahren zur Herstellung hochreiner Formylphenylboronsäuren**

(30) Priorität: 01.07.2000 DE 10032017
(71) Anmelder: Clariant GmbH, 65929 Frankfurt am Main (DE)
(72) Erfinder: Vollmüller, Frank, Dr., 60323 Frankfurt am Main (DE); Meudt, Andreas, Dr., 65439 Flörsheim-Weilbach (DE); Scherer, Stefan, Dr., 64572 Büttelborn (DE)

(57) **Zusammenfassung**

Verfahren zur Aufreinigung von Formylphenylboronsäuren der allgemeinen Formel (I) 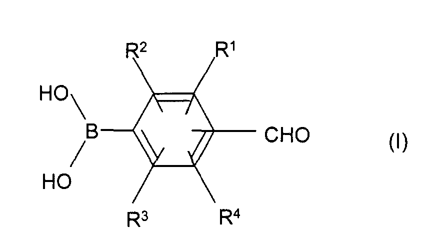 wobei sich die Formylfunktion in ortho- meta- oder para-Position zur Boronsäurefunktion befindet und R¹ bis R⁴ unabhängig voneinander die Bedeutung Wasserstoff, C₁-C₁₂-Alkyl, C₂-C₁₂-Alkenyl, C₂-C₁₂-Alkinyl, C₃-C₁₂-Cycloalkyl, (C₁-C₁₂)-Alkoxy, O-Phenyl, O-Benzyl, Aryl, Heteroaryl, Fluor, N(Alkyl)₂, N[Si(C₁-C₄-Alkyl)₃]₂ oder CF₃ haben, oder R¹ und R², und/oder R³ und R⁴, zusammen einen aliphatischen oder aromatischen Ring bilden,
durch Lösen der rohen Formylphenylboronsäuren in einem alkalischen Lösemittel mit einem pH-Wert im Bereich von 8 bis 11, Abtrennung der unlöslichen organischen Verunreinigungen und anschließendes Ausfällen durch Ansäuern der alkalischen Boronsäurelösung und Abtrennen und Aufarbeiten der ausgefällten Boronsäure. Vorzugsweise wird die rohe Formylphenylboronsäure in wässrigen Alkali- oder Erdalkalioxid, -hydroxid, -carbonat oder-phosphatlösungen bei Temperaturen im Bereich von 5 bis 50°C gelöst. Die erhaltenen Formylphenylboronsäuren besitzen eine Reinheit ≥ 99 % und eignen sich als Vorprodukte für flüssigkristalline Verbindungen, als Flüssigkristalle oder als Bestandteil von flüssigkristallinen Mischungen oder als pharmazeutische Vorprodukte.

## Beschreibung

Die herkömmlichen Syntheserouten für Formylphenylboronsäure und substituierte Derivate wird ausgehend von dem entsprechenden Halogenaromaten entweder wie in Liebigs Ann. 1995, 1253- 1257 und Chem. Ber. 123 (1990) 1841 - 1843 beschrieben, durch Umsetzung des entsprechenden geschützten Bromaromaten mit Magnesium in einer Grignard-Reaktion und anschließender Addition von Trialkylborat in 94 % bzw. 78 % Ausbeute oder wie in Tetrahedron Lett 1998, 39, 7537 - 7540 beschrieben mittels Umsetzung des entsprechenden geschützten Bromaromaten mit Butyllithium bei -78°C und anschließender Reaktion mit Triisopropylborat in 99 % Ausbeute zur entsprechenden Formylphenylboronsäure synthetisiert.

Für die technische Herstellung ist dabei allerdings unvorteilhaft, dass eine hohe Reinheit nur bei sehr tiefen (-78°C) und damit unwirtschaftlichen Temperaturen sowie mit teuren Organolithium-Verbindungen erzielt werden kann.

Höhere Temperaturen sowohl bei der Herstellung der metallorganischen Verbindung (Rückflusstemperatur von THF bei der Grignard-Stufe) als auch Temperaturen von > -40°C bei der Addition des Trialkylboronsäureesters an die metallorganische Verbindung liefern das Produkt häufig in nicht ausreichender Reinheit. Häufigste organische Verunreinigungen sind dabei die entsprechenden Triarylborane und Borinsäuren bzw. Benzaldehyd sowie die entsprechend substituierten Hydroxybenzaldehyde und Bisformylbiphenyle, die während der Grignard-Reaktion entstehen können.

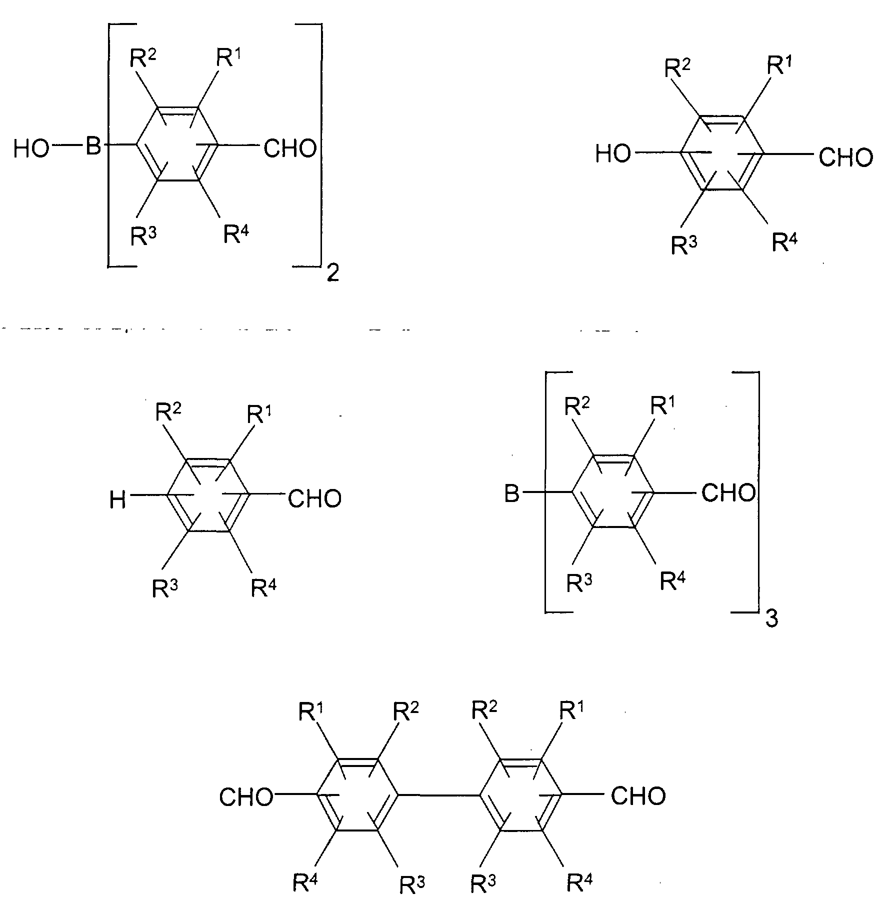

Die Verunreinigungen stören bei der Verwendung als Vorprodukt für flüssigkristalline Verbindungen, als Flüssigkristalle oder als Bestandteil von flüssigkristallinen Mischungen insbesondere bei Verwendung als pharmazeutische Vorprodukte oder generell bei Anwendungen, die höchste Reinheit erfordern.

Üblicherweise werden Boronsäuren aus dem Reaktionsgemisch isoliert, indem die Suspension aus der Borat-Addition hydrolysiert und nach Phasentrennung aus der homogenen organischen Phase Tetrahydrofuran (THF) abdestilliert wird. Während der Destillation fällt die Boronsäure aus der Lösung aus und kann mittels Filtration abgetrennt werden.
Die organischen Verunreinigungen sind nach dieser Methode nur unvollständig oder gar nicht abtrennbar.

Es besteht die Möglichkeit, oben beschriebene Verunreinigungen mittels mehrfacher Extraktion mit Toluol zu entfernen, die Boronsäure wie in Chem. Ber. 123 (1990) 1841 - 1843 beschrieben unter großen Ausbeuteverlusten aus Wasser oder aus Salzsäure (Synthesis 1999, 2041-2044) umzukristallisieren.

In Liebigs Ann. 1995, 1253 - 1257 ist weiterhin beschrieben, die 4-Formylphenylboronsäure mittels Lösen in Kalilauge bei pH 14, Extraktion der wässrigen Lösung mit Methyl-^{*t*}butylether (MTBE) und anschließendem Ausfällen der Boronsäure mit Schwefelsäure zu reinigen. In der Veröffentlichung ist eine im NMR sichtbare Verunreinigung mit einem Gehalt von 5 - 7 % beschrieben.
Eigene diesbezügliche Versuche zeigten, dass z.B. 4-Formylphenylboronsäure in wässrigem alkalischen Milieu ab einem pH-Wert > 11 in erheblichem Ausmaß im Sinne einer Cannizzaro-Reaktion reagiert. Dabei ist es nur mit sehr großem Aufwand möglich, die entstandene 4-Carboxyphenylboronsäure und 4-(Hydroxymethyl)-phenylboronsäure aus dem Gemisch abzutrennen.

Es besteht daher die Aufgabe ein Verfahren zur Aufreinigung von Formylphenylboronsäure und ihren Derivaten zur Verfügung zu stellen, das es erlaubt die Formylphenylboronsäure in hochreiner Form herzustellen, das die beschriebenen Nachteile nicht aufweist.

Die Aufgabe wird durch die vorliegende Erfindung gelöst und betrifft ein Verfahren zur Aufreinigung von Formylphenylboronsäuren der allgemeinen Formel (I) 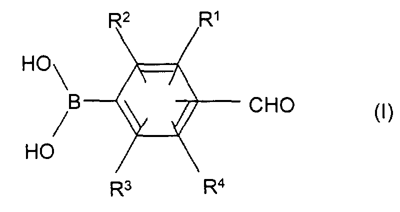 wobei sich die Formylfunktion in ortho-, meta- oder para-Position, vorzugsweise in para-Position, zur Boronsäurefunktion befindet und R¹ bis R⁴ unabhängig voneinander die Bedeutung Wasserstoff, C₁-C₁₂-Alkyl, C₂-C₁₂-Alkenyl, C₂-C₁₂-Alkinyl, C₃-C₁₂-Cycloalkyl, (C₁-C₁₂-)-Alkoxy, O-Phenyl, O-Benzyl, Aryl, Heteroaryl, Fluor, N(Alkyl)₂, N[Si(C₁-C₄-Alkyl)₃]₂ oder CF₃ haben, oder R¹ und R², und/oder R³ und R⁴, zusammen einen aliphatischen oder aromatischen Ring bilden, durch Lösen der rohen Formylphenylboronsäuren in einem alkalischen Lösemittel mit einem pH-Wert im Bereich von 8 bis 11, vorzugsweise bei einem pH-Wert im Bereich von 9 bis 11, Abtrennung der unlöslichen organischen Verunreinigungen und anschließendes Ansäuern der alkalischen Boronsäurelösung und Abtrennen und Aufarbeiten der ausgefällten Boronsäure.

Vorzugsweise stehen in Formel (I) R¹ bis R⁴ für Wasserstoff, C₁-C₆-Alkyl, C₂-C₆-Alkenyl, (C₁-C₄)-Alkoxy, O-Phenyl, O-Benzyl, Aryl, Heteroaryl, Fluor, N(C₁-C₄-Alkyl)₂, oder CF₃, oder R¹ und R², und/oder R³ und R⁴ bilden zusammen einen gesättigten oder ungesättigten maximal fünf- oder sechsgliedrigen Ring.
Besonders bevorzugt bedeuten R¹ bis R⁴ Wasserstoff, C₁-C₄-Alkyl, C₂-C₄-Alkenyl, (C₁-C₄-)-Alkoxy, Aryl, Fluor, N(C₁-C₄-Alkyl)₂, oder CF₃, oder R¹ und R², und / oder R³ und R⁴ bilden zusammen einen ankondensierten Cyclohexyl-, Cyclopentyl- oder gemeinsam mit dem aromatischen Ring eine Naphthyl-Struktur.

Gemäß des vorliegenden Verfahrens werden die isolierten rohen Formylphenylboronsäuren in einem alkalischen Lösungsmittel, wie z.B. wässrigen Lösungen von Alkali- oder Erdalkalioxiden, -hydroxiden, -carbonaten oder -phosphaten gelöst. Vorzugsweise werden Natriumhydroxid- und Kaliumhydroxidlösungen verwendet.
Dabei muss gewährleistet sein, dass der pH-Wert in einem Bereich von 8 bis 11, bevorzugt im Bereich von 9 bis 11 liegt, besonders bevorzugt in einem Bereich von 9,5 bis 10,5. Bei pH-Werten > 11 werden Cannizzaro-Produkte, wie vorstehend beschrieben, gebildet.

Die in den verwendeten wässrigen Lösungen unlöslichen organischen Verunreinigungen können anschließend durch Adsorption an Aktivkohle oder Extraktion mit inerten, nicht wassermischbaren organischen Lösungsmitteln wie z.B. aliphatische Kohlenwasserstoffe wie verschiedene Heptane, Oktane, cyclische aliphatische Kohlenwasserstoffe wie Cyclohexan, Methylcyclohexan, aromatische Kohlenwasserstoffe wie Toluol, o-, m-, p-Xylole, Chlorbenzol, o-, m-, p-Dichlorbenzol oder Ethern wie Diethylether, Di-iso-propylether, Dibutylether, Methyl-tert.-butylether oder Methylethylketon oder Methylisobutylketon um nur einige aufzuzählen, extrahiert werden.
Vorzugsweise wird Toluol, Xylol oder Xylolderivate, Methyl-tert.-butylether verwendet.

Durch Ansäuern der alkalischen Boronsäurelösung wird die Boronsäure nachdem die Verunreinigungen abgetrennt wurden, in hochreiner Form wieder ausgefällt. Als anorganische Mineralsäuren werden bevorzugt Schwefelsäure, Salzsäure, Salpetersäure oder Phosphorsäure verwendet. Als organische Säuren können beispielsweise Ameisensäure oder Essigsäure verwendet werden.
Bevorzugt wird Salzsäure oder Schwefelsäure zum Ansäuern eingesetzt. Nach Filtration, Wäsche und Trocknung erhält man die hochreine Arylboronsäure.

Die Aufreinigung, d.h. der alkalische Lösevorgang, wird bei Temperaturen von 5 bis 50°C, bevorzugt von 5 bis 25°C, besonders bevorzugt von 5 bis 10°C durchgeführt. Die Reinigung bei höheren Temperaturen führt zu Zersetzungsprodukten der Formyl-Funktion z.B. in Form einer Cannizzaro-Reaktion zur entsprechenden Carboxy- und Hydroxymethyl-Funktion führen.
Um Zersetzung der Formylphenylboronsäuren zu vermeiden, wird diese also erfindungsgemäß bei einem pH-Wert im Bereich von 8 bis 11 gelöst. Dies kann beispielsweise erreicht werden, indem die rohe Boronsäure in Wasser suspendiert wird und anschließend der pH-Wert der Lösung mit einer wässrigen Basenlösung oder der Base selbst auf einen pH-Wert zwischen 8 und 11 eingestellt wird.

Mit dem erfindungsgemäßen Verfahren ist es auf einfache und wirtschaftliche Weise möglich Arylboronsäuren mit einer Reinheit von ≥ 99 %, insbesondere ≥ 99,5% herzustellen. Die so erhaltenen Arylboronsäuren eignen sich hervorragend als Vorprodukte für flüssigkristalline Verbindungen, als Bestandteil von flüssigkristallinen Mischungen oder als pharmazeutische Vorprodukte.

### Beispiele:

### Beispiel 1: 4-Formylphenylboronsäure

385 g 4-Formylphenylboronsäure roh (Gehalt nach HPLC 95 %) werden in 2 l Wasser suspendiert und auf 10°C gekühlt. Innerhalb von 3,5 Stunden werden 1025 ml 10 %ige Natronlauge derart zugetropft, dass die Innentemperatur 10°C nicht übersteigt sowie der pH den Wert 10,5 nicht übersteigt. Nach 30 minütigem Nachrühren wird der Niederschlag abfiltriert. Die wässrige Phase wird dann zweimal mit jeweils 250 ml Toluol extrahiert. Anschließend wird bei einer Innentemperatur von 10°C die Boronsäure mit 230 ml konz. Salzsäure wieder ausgefällt. Der Niederschlag wird abfiltriert, mit Wasser nachgewaschen und bei 50°C im Stickstoffstrom getrocknet. Man erhält 345 g 4-Formylphenylboronsäure (94 % d.Th.) als blass gelben Feststoff mit einer Reinheit von 99.6 % (HPLC).

### Beispiel 2: 4-Formylphenylboronsäure

Analog Beispiel 1 erhält man mittels Adsorption mit 25 g Aktivkohle 4-Formylphenylboronsäure mit einer Reinheit von 99,4 %.

### Beispiel 3: 3-Formylphenylboronsäure

250 g 3-Formylphenylboronsäure roh (Gehalt nach HPLC 96 %) werden in 1300 ml Wasser suspendiert und auf 10°C gekühlt. Innerhalb von 2,5 Stunden werden 670 ml 10 %ige Natronlauge derart zugetropft, dass die Innentemperatur 10°C nicht übersteigt sowie der pH den Wert 10,5 nicht übersteigt. Nach 30 minütigem Nachrühren wird der Niederschlag abfiltriert. Die wässrige Phase wird dann zweimal mit jeweils 150 ml Toluol extrahiert. Anschließend wird bei einer Innentemperatur von 10°C die Boronsäure mit 150 ml konz. Salzsäure wieder ausgefällt. Der Niederschlag wird abfiltriert, mit Wasser nachgewaschen und bei 50°C im Stickstoffstrom getrocknet. Man erhält 237,1 g 3-Formylphenylboronsäure (95 % d.Th.) als blass gelben Feststoff mit einer Reinheit von 99,5 % (HPLC).

### Beispiel 4: 2-Formylnaphthyl-1-boronsäure

23 g 2-Formylnaphthyl-1-boronsäure roh (Gehalt nach HPLC 96 %) werden in 100 ml Wasser suspendiert und auf 10°C gekühlt. Innerhalb von 1 h werden 48 ml 10 %ige Natronlauge derart zugetropft, dass die Innentemperatur 10°C nicht übersteigt sowie der pH den Wert 10,5 nicht übersteigt. Nach 10 minütigem Nachrühren wird der Niederschlag abfiltriert. Die wässrige Phase wird dann zweimal mit jeweils 50 ml Toluol extrahiert. Anschließend wird bei einer Innentemperatur von 10°C die Boronsäure mit 45 ml 10 %iger Salzsäure wieder ausgefällt. Der Niederschlag wird abfiltriert, mit Wasser nachgewaschen und bei 50 C im Stickstoffstrom getrocknet. Man erhält 20,5 g 2-Formylnaphthyl-1-boronsäure (89 % d.Th.) als hell gelben Feststoff mit einer Reinheit von 99,3 % (HPLC).

### Beispiel 5: 3-Fluor-4-formylphenylboronsäure

33 g 3-Fluor-4-formylphenylboronsäure roh (Gehalt nach HPLC 93 %) werden in 250 ml Wasser suspendiert und auf 10°C gekühlt. Innerhalb von 1,5 Stunden werden 75 ml 10 %ige Natronlauge derart zugetropft, dass die Innentemperatur 10°C nicht übersteigt sowie der pH den Wert 10,5 nicht übersteigt. Nach 10 minütigem Nachrühren wird der Niederschlag abfiltriert. Die wässrige Phase wird dann zweimal mit jeweils 50 ml Toluol extrahiert. Anschließend wird bei einer Innentemperatur von 10 C die Boronsäure mit 77 ml 10 %iger Salzsäure wieder ausgefällt. Der Niederschlag wird abfiltriert, mit Wasser nachgewaschen und bei 50°C im Stickstoffstrom getrocknet. Man erhält 29 g 3-Fluor-4-formylphenylboronsäure (94,4 % d.Th.) als gelben Feststoff mit einer Reinheit von 99,7 % (HPLC).

### Beispiel 6: 3-Formyl-4-methoxyphenylboronsäure

25 g 3-Formyl-4-methoxyphenylboronsäure roh (Gehalt nach HPLC 96 %) werden in 200 ml Wasser suspendiert und auf 10°C gekühlt. Innerhalb von 1,5 Stunden werden 58 ml 10 %ige Natronlauge derart zugetropft, dass die Innentemperatur 10°C nicht übersteigt sowie der pH den Wert 10,5 nicht übersteigt. Nach 10 minütigem Nachrühren wird der Niederschlag abfiltriert. Die wässrige Phase wird dann zweimal mit jeweils 50 ml Toluol extrahiert. Anschließend wird bei einer Innentemperatur von 10°C die Boronsäure mit 60 ml 10 %iger Salzsäure wieder ausgefällt. Der Niederschlag wird abfiltriert, mit Wasser nachgewaschen und bei 50°C im Stickstoffstrom getrocknet. Man erhält 22,1 g 3-Formyl-4-methoxyphenylboronsäure (92 % d.Th.) als farblosen Feststoff mit einer Reinheit von 99,6 % (HPLC).

### Vergleichsbeispiel: 4-Formylphenylboronsäure

Analog zur Vorschrift in Liebigs Ann. 1995, 1253-1257 wurden unter Stickstoff in einem getrockneten 21-Kolben mit Tropftrichter eine Lösung von 120 g Tri-n-Butylborat in 250 g trockenem Tetrahydrofuran vorgelegt und auf -50°C gekühlt. Nun werden 535 g einer 26,5 %igen Lösung von 4-Diethoxymethylphenylmagnesiumbromid in THF so zugetropft, dass die Innentemperatur -40 bis -50°C nicht überschreitet. Der Ansatz wird anschließend 1 Stunde bei -50°C nachgerührt. Anschließend wurden 1 I Methyl-^{*t*}butylether (MTBE) zugesetzt und bei 5 - 10°C mit 650 g 1 M Schwefelsäure hydrolysiert. Die wässerige Phase wurde abgetrennt und dreimal mit jeweils 500 ml Methyl-^{*t*}butylether extrahiert. Das Lösungsmittel wurde im Vakuum abdestilliert und die rohe Boronsäure bei 5°C in 0,5 I Wasser und 185 ml 5 N Kalilauge wieder aufgenommen (pH 14). Die wässrige Phase wurde einmal mit 250 ml MTBE extrahiert und anschließend bei 5°C mit 400 ml 1 M Schwefelsäure auf pH 1 gestellt. Des Niederschlag wurde abfiltriert, zweimal mit jeweils 150 ml Eiswasser nachgewaschen und getrocknet. Man erhält 66,1 g 4-Formylphenylboronsäure (88 % d.Th.) Gehalt nach HPLC 89 % 4-Formylphenylboronsäure, 4 % 4-Carboxy-phenylboronsäure, 3,8 % 4-Hydroxymethylphenylboronsäure.

## Patentansprüche

1. Verfahren zur Aufreinigung von Formylphenylboronsäuren der allgemeinen Formel (I): 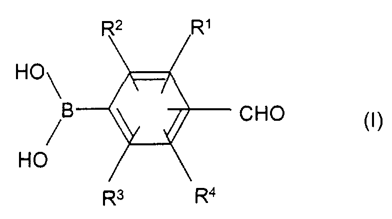 wobei sich die Formylfunktion in ortho- meta- oder para-Position zur Boronsäurefunktion befindet und R¹ bis R⁴ unabhängig voneinander die Bedeutung Wasserstoff, C₁-C₁₂-Alkyl, C₂-C₁₂-Alkenyl, C₂-C₁₂-Alkinyl, C₃-C₁₂-Cycloalkyl, (C₁-C₁₂)-Alkoxy, O-Phenyl, O-Benzyl, Aryl, Heteroaryl, Fluor, N(Alkyl)₂, N[Si(C₁-C₄-Alkyl)₃]₂ oder CF₃ haben, oder R¹ und R², und/oder R³ und R⁴, zusammen einen aliphatischen oder aromatischen Ring bilden,
durch Lösen der rohen Formylphenylboronsäuren in einem alkalischen Lösemittel mit einem pH-Wert im Bereich von 8 bis 11, Abtrennung der unlöslichen organischen Verunreinigungen und anschließendes Ausfällen durch Ansäuern der alkalischen Boronsäurelösung und Abtrennen und Aufarbeiten der ausgefällten Boronsäure.

2. Verfahren nach Anspruch 1, **dadurch gekennzeichnet, dass** die rohe Formylphenylboronsäure in wässrigen Alkali- oder Erdalkalioxid, -hydroxid, -carbonat oder -phosphatlösungen gelöst wird.

3. Verfahren nach mindestens einem der vorhergehenden Ansprüche, **dadurch gekennzeichnet, dass** die Aufreinigung bei Temperaturen im Bereich von 5 bis 50°C durchgeführt wird.

4. Verfahren nach mindestens einem der vorhergehenden Ansprüche, **dadurch gekennzeichnet, dass** die organischen Verunreinigungen durch Adsorption an Aktivkohle oder Extraktion mit inerten, nicht wassermischbaren Lösungsmitteln entfernt werden.

5. Verfahren nach mindestens einem der vorhergehenden Ansprüche, **dadurch gekennzeichnet, dass** die erhaltene Formylphenylboronsäure eine Reinheit ≥ 99 % besitzt.

6. Formylphenylboronsäure der Formel (I) mit einer Reinheit ≥ 99 %, erhältlich nach einem Verfahren gemäß mindestens einem der Ansprüche 1 bis 5.

7. Verwendung der Formylphenylboronsäure gemäß Anspruch 6 als Vorprodukt für flüssigkristalline Verbindungen, als Flüssigkristalle oder als Bestandteil von flüssigkristallinen Mischungen oder als pharmazeutische Vorprodukte.
